# DEMANDE DE BREVET EUROPEEN

(11) **EP 0 630 776 A1**
(43) Date de publication de la demande: **28.12.1994**
(21) Numéro de dépôt: 94401425.7
(22) Date de dépôt: 24.06.1994
(51) Int. Cl.: B60K 6/06

(54) **Dispositif d'entraînement hybride pour véhicule automobile**

(30) Priorité: 25.06.1993 FR 9307743
(71) Demandeur: Société Anonyme dite: REGIE NATIONALE DES USINES RENAULT, F-92109 Boulogne Billancourt (FR)
(72) Inventeur: Ledoux, Jean-François, F-92500 Rueil-Malmaison (FR); Malek, Nadim, F-78000 Versailles (FR)

(57) **Abrégé**

Dispositif d'entraînement hybride pour véhicule automobile, comportant d'une part un moteur thermique (2) entraînant un alternateur (5) capable d'alimenter un moteur électrique (6) et/ou de charger une batterie (8) et d'autre part un onduleur de démarrage (12, 12'), assurant le lancement du moteur thermique (2) sur la batterie (8) par l'intermédiaire de l'alternateur (5), caractérisé en ce que l'alternateur (5) est utilisé comme moteur, pour transmettre de l'énergie à un volant d'inertie (14).

## Description

La présente invention se rapporte à un dispositif d'entraînement hybride pour véhicule automobile. Plus précisément, elle concerne un dispositif permettant d'entraîner un véhicule à partir d'un moteur thermique qui alimente un moteur électrique tout en pouvant recharger une batterie, ou d'assurer l'entraînement du véhicule sans le moteur thermique, en consommant dans le moteur électrique, l'énergie stockée par la batterie.

L'intégration d'un volant d'inertie dans une installation de puissance de véhicule automobile est une disposition connue, visant à emmaganiser de l'énergie mécanique lorsque le véhicule se déplace dans des conditions normales, pour disposer d'un surplus de puissance dès que les circonstances le justifient, par exemple en côte, au démarrage, ou lors d'une forte accélération.

La publication FR 2200415 décrit une installation de puissance pour véhicule automobile, comportant une machine motrice, telle qu'un moteur à combustion interne, et un volant d'inertie pouvant être entraîné par la machine motrice pour emmaganiser de l'énergie, ou être relié à la transmission du véhicule, pour restituer cette énergie.

La publication NL 90002415 divulgue par ailleurs un système de propulsion électrique incluant un volant d'inertie couplé au rotor d'une machine électrique. Cependant ce système ne prévoit pas de combiner dans un même véhicule un système d'entraînement hybride et un volant d'inertie.

Le problème sur lequel repose l'invention consiste à intégrer un volant d'inertie dans un dispositif d'entraînement muni d'un moteur thermique et d'un moteur électrique, de façon à disposer d'un surplus de puissance disponible lorsque le moteur thermique ne fonctionne pas, en tirant parti de toutes les possibilités de stockage et de transformation d'énergie offertes par un système hybride.

Ce problème est résolu en utilisant l'alternateur du dispositif d'entraînement comme moteur, pour emmagasiner de l'énergie dans le volant d'inertie.

L'intégration d'un volant d'inertie dans un dispositif d'entraînement hybride pose par ailleurs un problème spécifique, relatif au contrôle de ses différents modes de fonctionnement.

Ce problème est résolu en adaptant un premier organe d'embrayage entre le moteur thermique et l'alternateur, et un second organe d'embrayage entre l'alternateur et le volant d'inertie.

L'utilisation de l'alternateur comme moteur pour entraîner le volant d'inertie suppose en outre de disposer de moyens d'ondulation du courant, adaptés à cette utilisation particulière.

Ce problème est résolu en recalibrant l'onduleur de démarrage du moteur thermique.

D'autres caractéristiques et avantages de l'invention apparaîtront à la lecture de la description suivante d'un mode de réalisation particulier de celle-ci, en liaison avec les dessins annexés, sur lesquels :
- la figure 1 est un schéma de principe d'un dispositif d'entraînement hybride classique,
- la figure 2 illustre un premier mode de réalisation de l'invention, et
- la figure 3 illustre un second mode de réalisation de l'invention.

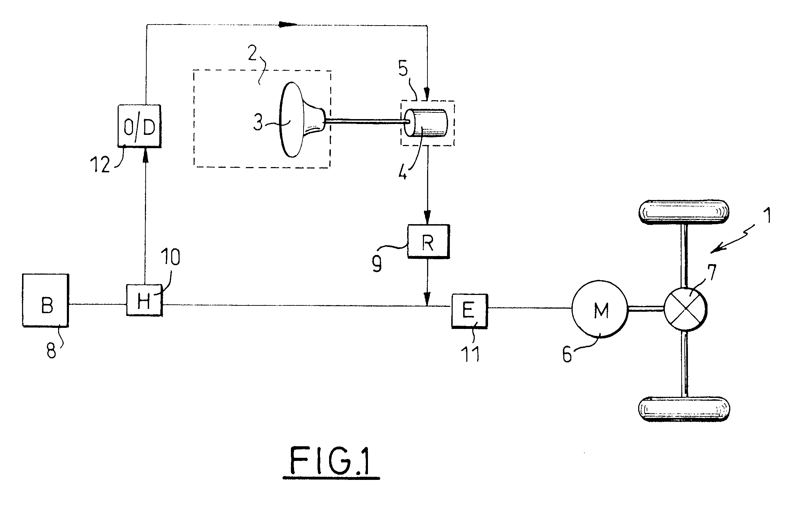

Le dispositif d'entraînement représenté sur la figure 1 comporte d'une part un moteur thermique 2, tel qu'une turbine à gaz présentant une roue de turbine 3, et d'autre part un moteur électrique 6 relié mécaniquement au différentiel 7 d'un essieu moteur 1. Le moteur électrique peut être un moteur à courant continu, un moteur asynchrone, un moteur synchrone bobiné à aimants permanents, ou un moteur à réductance. Il est alimenté à partir de l'alternateur 5 ou de la batterie 8, par l'intermédiaire d'une électronique de commande 11.

Lorsque la turbine 2 tourne, la roue de turbine 3 entraîne en rotation le rotor 4 de l'alternateur 5, qui délivre un courant alternatif redressé par le redresseur 9, permettant d'alimenter l'électronique de commande 11 du moteur électrique 6, et/ou de charger la batterie 8. Le chargement de la batterie 8 s'effectue par l'intermédiaire du redresseur 9, tel qu'un redresseur à diodes et du hacheur 10. Lorsque la turbine 2 est arrêtée, le moteur électrique 6 peut également entraîner l'essieu 1, en tournant uniquement sur la batterie 8. Le démarrage de la turbine 2 s'effectue au moyen de l'alternateur 5, utilisé comme moteur, et alimenté à cet effet à partir de la batterie 8, par l'onduleur de démarrage 12. Enfin, l'énergie dissipée dans le moteur électrique 6 lors du freinage est récupérée par la batterie 8.

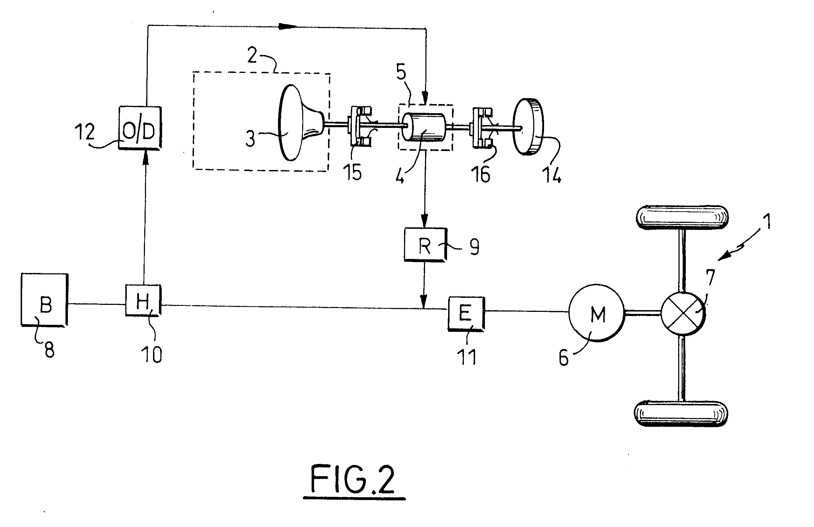

Sur la figure 2, le rotor 4 de l'alternateur 5 est relié mécaniquement à un volant d'inertie 14. Un premier et un second organe d'embrayage 15 et 16, sont montés respectivement entre la roue de turbine 3 et le rotor 4, et entre le rotor 4 et un volant d'inertie 14. L'invention propose en effet de monter un volant d'inertie 14 sur le rotor 4 de l'alternateur 5, en vue de stocker de l'énergie mécanique dans celui-ci. Le volant 14 peut être entraîné en rotation par le rotor 4 de l'alternateur 5, qui est alors utilisé comme moteur. Le stockage de l'énergie dans le volant est donc obtenu en exploitant le fonctionnement réversible de l'alternateur 5, utilisable soit comme générateur électrique lorsqu'il est entraîné mécaniquement en rotation, soit comme moteur, lorsqu'il est alimenté par un courant électrique.

Conformément à l'invention, l'ondulation du courant alimentant l'alternateur 5 utilisé comme moteur de démarrage et du volant d'inertie 14, est assurée par l'onduleur de démarrage 12. Cette adaptation, supposant un recalibrage approprié de l'onduleur de démarrage 12, permet de ne prévoir dans le dispositif d'entraînement qu'un seul onduleur, utilisé pour mettre en route la turbine 2, et pour entraîner le volant d'inertie 14.

L'utilisation de l'alternateur 5 comme moteur du volant d'inertie 14, lorsque le véhicule roule sur la batterie 8 permet d'emmagasiner de l'énergie mécanique et de disposer d'une puissance d'appoint disponible, sans avoir à remettre en route la turbine 2. Par ailleurs, l'utilisation de l'onduleur de démarrage 12 pour alimenter l'alternateur 5 lorsqu'il entraîne le volant d'inertie 14 est en elle-même une disposition très avantageuse, grâce à laquelle il n'est pas nécessaire d'équiper le véhicule d'un onduleur et d'un moteur particuliers, pour entraîner le volant 14.

Les deux organes d'embrayage 14, 16, prévus de part et d'autre de l'alternateur 5, contrôlent le fonctionnement du dispositif. Ces organes peuvent être constitués par des dispositifs d'accouplement mécanique, aussi bien que par des systèmes de couplage magnétique. Lorsque la turbine 2 tourne (mode "turbo-électrique" et démarrage), le premier embrayage 15 est serré, de façon à rendre solidaires la roue de turbine 3, et le rotor 4 de l'alternateur 5, tandis que le second embrayage 16 est ouvert, puisque dans cette situation, le volant d'inertie 14 ne stocke pas d'énergie. Lorsque la turbine 2 est arrêtée, c'est à dire lorsque le véhicule fonctionne uniquement sur la batterie 8, le premier embrayage 15 est ouvert et le second embrayage 16 est fermé. Le rotor 4 de l'alternateur 5 n'est plus relié à la turbine 2, mais il est solidaire du volant 14, pour permettre le transfert d'énergie mécanique entre ces deux organes.

Le dispositif de la figure 2 fonctionne par ailleurs comme celui de la figure 1. En "mode électrique", l'énergie de la batterie est transmise au moteur électrique 6 et à l'alternateur 5, par l'intermédiaire de 1' onduleur-démarreur 12'. En mode "turbo-électrique", le courant délivré par l'alternateur 5 est dirigé sur le moteur 6 et sur la batterie 8, via le redresseur 9, et le hacheur 10. Lors du démarrage l'onduleur-démarreur 12 est alimenté par la batterie 8. Lors du freinage, l'énergie récupérée dans le moteur électrique 6 rejoint la batterie 8 ou le volant d'inertie 14.

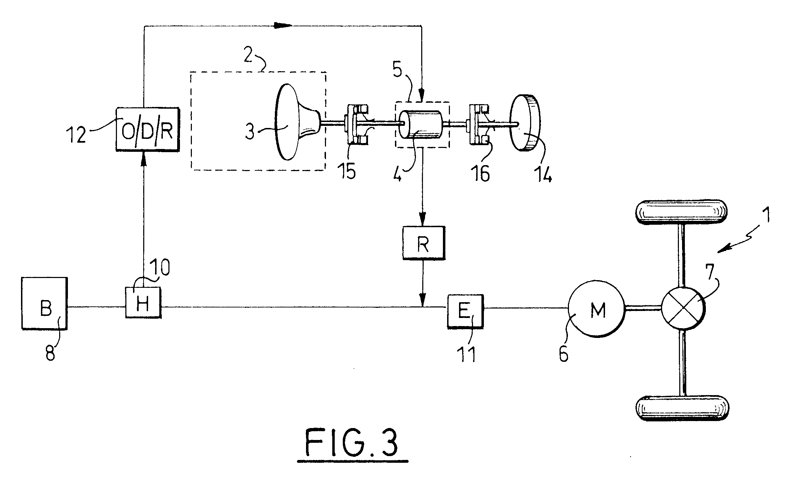

Le second mode de réalisation de l'invention, illustré par la figure 3, introduit un regroupement de fonctions particulier, en intégrant le redressement du courant dans l'onduleur de démarrage 12 devenant ainsi un redresseur-onduleur de démarrage 12'. Cette intégration, suppose que l'onduleur de démarrage 12' soit réversible. Elle permet de supprimer le redresseur 9 dans la chaîne de puissance. Pour recharger la batterie 8, le courant délivré par l'alternateur 5, empruntera désormais 1' onduleur-démarreur-redresseur 12', avant de traverser le hacheur 10. La suppression du redresseur 9 simplifie le dispositif proposé, sans modifier son fonctionnement.

En conclusion, il faut souligner que le dispositif de l'invention, permet de constituer une réserve d'énergie mécanique disponible lorsque le véhicule est entraîné uniquement par la batterie. Cette disposition est extrêmement avantageuse, car la batterie peut être soulagée, sans avoir à remettre en route la turbine. Le recalibrage de l'onduleur de démarrage, réduit par ailleurs le temps de démarrage de la turbine. Enfin, l'utilisation de l'alternateur comme moteur permet de transmettre de l'énergie mécanique au moteur thermique, lors du freinage, donc de disposer d'un frein moteur très appréciable, car il permet d'une part de réduire la vitesse du véhicule en descente, et d'autre part de dissiper sous forme de chaleur, dans son système d'échappement, l'énergie, qui n'est plus acceptée par la batterie, lorsque celle-ci est chargée.

## Revendications

**[1]** Dispositif d'entraînement hybride pour véhicule automobile, comportant d'une part un moteur thermique (2) entraînant un alternateur (5) capable d'alimenter un moteur électrique (6) et/ou de charger une batterie (8) et d'autre part un onduleur de démarrage (12, 12'), assurant le lancement du moteur thermique (2) sur la batterie (8) par l'intermédiaire de l'alternateur (5), caractérisé en ce que l'alternateur (5) est utilisé comme moteur, pour transmettre de l'énergie à un volant d'inertie (14).

**[2]** Dispositif d'entraînement selon la revendication 1, caractérisé en ce qu'il comporte, un premier organe d'embrayage (15) disposé entre le moteur thermique (2) et l'alternateur (5), et un second organe d'embrayage (16), disposé entre l'alternateur (5) et le volant d'inertie (14).

**[3]** Dispositif d'entraînement selon les revendications 1 ou 2, caractérisé en ce que l'onduleur de démarrage (12, 12') est calibré de façon à pouvoir alimenter l'alternateur (5), lorsque celui-ci entraîne le volant d'inertie (14).

**[4]** Dispositif d'entraînement selon les revendications 1, 2 ou 3, caractérisé en ce que le moteur thermique (2) est une turbine, présentant une roue de turbine (3), reliée au rotor (4) de l'alternateur (5).

**[5]** Dispositif d'entraînement selon la revendication 4, caractérisé en ce que le redressement du courant rechargeant la batterie (8) est assuré par l'onduleur de démarrage (12').

**[6]** Dispositif d'entraînement selon l'une des revendications précédentes, caractérisé en ce que le volant d'inertie (14) est monté sur le rotor (4) de l'alternateur (5).

**[7]** Dispositif d'entraînement selon l'une des revendications précédentes, caractérisé en ce que, lors du freinage, l'alternateur (5) transmet au moteur thermique (2) de l'énergie mécanique, dissipée en chaleur par celui-ci.

**[8]** Dispositif d'entraînement selon l'une des revendications 2 à 7, caractérisé en ce que les organes d'embrayage (15, 16) sont constitués par des moyens d'accouplement mécanique.

**[9]** Dispositif d'entraînement selon l'une des revendications 2 à 7, caractérisé en ce que les organes d'embrayage (15, 16) sont constitués par des systèmes de couplage magnétique.
